# EUROPEAN PATENT APPLICATION

(11) **EP 3 142 362 A1**
(43) Date of publication of application: **15.03.2017**
(21) Application number: 16188196.6
(22) Date of filing: 09.09.2016
(51) Int. Cl.: H04N 13/02, H04N 5/247, H04N 5/232, H04N 5/235

(54) **IMAGE FRAME SYNCHRONIZATION FOR DYNAMIC IMAGE FRAME RATE IN DUAL-CAMERA APPLICATIONS**

(30) Priority: 11.09.2015 US 201562217168 P; 23.11.2015 US 201562258575 P; 24.08.2016 US 201615245177
(71) Applicant: MediaTek Inc., Hsin-Chu 300 (TW)
(72) Inventor: Chen, Chih-Kai, 508 Changhua County (TW); Wu, Tung-Hai, 412 Taichung City (TW); Chan, Cheng-Che, 302 Hsinchu County (TW); Liu, Jung-Mao, 510 Changhua County (TW)
(74) Representative: Wright, Howard Hugh Burnby

(57) **Abstract**

Techniques and examples pertaining to frame synchronization for dynamic frame rate in dual-camera applications are described. A change in brightness in ambient lighting is detected when an electronic apparatus operates in a dual-camera mode utilizing images captured by a first image sensor and a second image sensor. In response to the detected change in brightness in the ambient lighting, exposure times and frame rates of the first image sensor and the second image sensor are adjusted and the frame rates are synchronized.

## Description

### TECHNICAL FIELD

The present disclosure is generally related to image processing in electronic apparatuses and, more particularly, to image frame synchronization for dynamic frame rate in dual-camera applications.

### BACKGROUND

Unless otherwise indicated herein, approaches described in this section are not prior art to the claims listed below and are not admitted to be prior art by inclusion in this section.

Driven by market demand and technology advancement, newer versions and models of portable electronic equipment, such as smartphones, are being introduced to the market with ever-increasing functionality and performance. For instance, certain models of smartphones are equipped with two cameras or image sensors. Such equipment are typically furnished with the capability to provide a user with a variety of features, such as creation of field depth, enhancement of dark-environment photography, increase in optical zooming capability and three-dimensional (3D) image capture capability.

For dual-camera applications, images captured by the two cameras are processed and an overall effect of image rendering generally depends on the processing algorithm in use. In various algorithms and applications, the effect of image rendering is often influenced by image frame synchronization. That is, synchronization of image frames from different cameras has profound impact on dual-camera applications and corresponding algorithms. As a stable light source is often required in order to optimize image frame synchronization, the diversity of dual-camera applications is thus limited.

### SUMMARY

The following summary is illustrative only and is not intended to be limiting in any way. That is, the following summary is provided to introduce concepts, highlights, benefits and advantages of the novel and non-obvious techniques described herein. Select and not all implementations are further described below in the detailed description. Thus, the following summary is not intended to identify essential features of the claimed subject matter, nor is it intended for use in determining the scope of the claimed subject matter.

According to one example implementation, a method may involve detecting a change in brightness in ambient lighting when an electronic apparatus operates in a dual-camera mode utilizing images captured by a first image sensor and a second image sensor; and synchronizing frame rates of the first image sensor and the second image sensor responsive to the detecting.

According to another example implementation, a method may involve launching a dual-camera application that utilizes images captured by a first image sensor and a second image sensor; detecting a change in brightness in ambient lighting; and synchronizing a first frame rate of the first image sensor and a second frame rate of the second image sensor responsive to the detecting.

Preferably the synchronizing comprises: determining a change in the second frame rate as a result of a change in an exposure time due to the detected change in brightness in the ambient lighting; and adjusting the first frame rate to synchronize the first frame rate and the second frame rate. It is advantageous for the adjusting of the first frame rate to synchronize the first frame rate and the second frame rate comprises: determining a difference between the first frame rate and the second frame rate; determining whether the difference between the first frame rate and the second frame rate is greater than a first threshold; responsive to a determination that the difference between the first frame rate and the second frame rate is greater than the first threshold, determining whether the difference between the first frame rate and the second frame rate is less than a second threshold which is greater than the first threshold; and responsive to a determination that the difference between the first frame rate and the second frame rate is less than the second threshold and greater than the first threshold, adjusting the first frame rate to match the second frame rate. It is even more advantageous for the adjusting of the first frame rate to synchronize the first frame rate and the second frame rate further comprises: responsive to a determination that the difference between the first frame rate and the second frame rate is less than the first threshold or greater than the second threshold, monitoring a change in the difference between the first frame rate and the second frame rate; and adjusting the first frame rate to match the second frame rate upon the difference between the first frame rate and the second frame rate falling within a range between the first threshold and the second threshold. It is advantageous for the adjusting of the first frame rate to synchronize the first frame rate and the second frame rate comprises: determining the first frame rate, the second frame rate, and a difference between the first frame rate and the second frame rate; and adjusting the first frame rate to match the second frame rate. Preferably the synchronizing comprises: determining, by a synchronization driver circuit, the first frame rate of the first image sensor, the second frame rate of the second image sensor, and a difference between the first frame rate and the second frame rate; communicating, by the synchronization driver circuit to an automatic exposure (AE) circuit, the first frame rate, the second frame rate, and the difference between the first frame rate and the second frame rate; and adjusting, by the AE circuit, an exposure time associated with the first image sensor and the second image sensor from a first exposure time to a second exposure time responsive to the detecting, wherein, responsive to the AE circuit adjusting the exposure time, the second frame rate of the second image sensor changes from a first value corresponding to the first exposure time to a second value corresponding to the second exposure time. Advantageously, the synchronizing further comprises: providing, by the AE circuit to the synchronization driver circuit, an indication that the exposure time is adjusted; and adjusting, by the synchronization driver circuit, the first frame rate to match the second frame rate. According to another example implementation, an apparatus may include a processor coupled to receive first data representative of first images captured by a first image sensor and second data representative of second images captured by a second image sensor, the processor configured to control a first frame rate of the first image sensor and a second frame rate of the second image sensor by performing operations comprising: detecting a change in brightness in ambient lighting based at least in part on the first data or the second data; adjusting an exposure time, associated with the first image sensor and the second image sensor, from a first exposure time to a second exposure time responsive to the detecting; and synchronizing the first frame rate and the second frame rate responsive to the detecting. The processor may include an automatic exposure (AE) circuit and a synchronization driver circuit. The AE circuit may be configured to detect a change in brightness in ambient lighting based at least in part on the first data or the second data. The AE circuit may be further configured to adjust an exposure time associated with the first image sensor and the second image sensor from a first exposure time to a second exposure time responsive to the detecting. The synchronization driver circuit may be configured to synchronize the first frame rate and the second frame rate responsive to the detected change in brightness in the ambient lighting.

Thus, the present disclosure provides techniques, schemes, methods and apparatus pertaining to optimization of synchronization of image frames from different cameras in situations where the brightness of ambient light is changing. Advantageously, implementations in accordance with the present disclosure improve the accuracy of algorithms and broaden the scope of user experience offered by dual-camera applications.

### BRIEF DESCRIPTION OF THE DRAWINGS

The accompanying drawings are included to provide a further understanding of the disclosure, and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example scenario showing effects resulting from various techniques, algorithms and schemes in accordance with the present disclosure.
FIG. 2 is a simplified block diagram of an example apparatus in accordance with an implementations of the present disclosure.
FIG. 3 is a diagram of an example set of functions 300 of the example apparatus of FIG. 2 in accordance with an implementations of the present disclosure.
FIG. 4 is a diagram of an example algorithm that effects image frame synchronization for dynamic frame rate in dual-camera applications in accordance with an implementation of the present disclosure.
FIG. 5 is a diagram of two example scenarios of image frame synchronization for dynamic frame rate in dual-camera applications in accordance with an implementation of the present disclosure.
FIG. 6 is a diagram of an example algorithm that effects image frame synchronization for dynamic frame rate in dual-camera applications in accordance with an implementation of the present disclosure.
FIG. 7 is a diagram of an example scenario of image frame synchronization for dynamic frame rate in dual-camera applications in accordance with another implementation of the present disclosure.
FIG. 8 is a diagram of an example scenario of image frame synchronization for dynamic frame rate in dual-camera applications in accordance with another implementation of the present disclosure.
FIG. 9 is a diagram of an example scenario pertaining to image frame synchronization for dynamic frame rate in dual-camera applications in accordance with various implementations of the present disclosure.
FIG. 10 is a flowchart of an example process pertaining to image frame synchronization for dynamic frame rate in dual-camera applications in accordance with an implementation of the present disclosure.
FIG. 11 is a flowchart of an example process pertaining to image frame synchronization for dynamic frame rate in dual-camera applications in accordance with another implementation of the present disclosure.

### DETAILED DESCRIPTION

### Overview

In the following detailed description, numerous specific details are set forth by way of examples in order to provide a thorough understanding of the relevant teachings. Any variations, derivatives and/or extensions based on teachings described herein are within the protective scope of the present disclosure. In some instances, well-known methods, procedures, components, and/or circuitry pertaining to one or more example implementations disclosed herein may be described at a relatively high level without detail, in order to avoid unnecessarily obscuring aspects of teachings of the present disclosure.

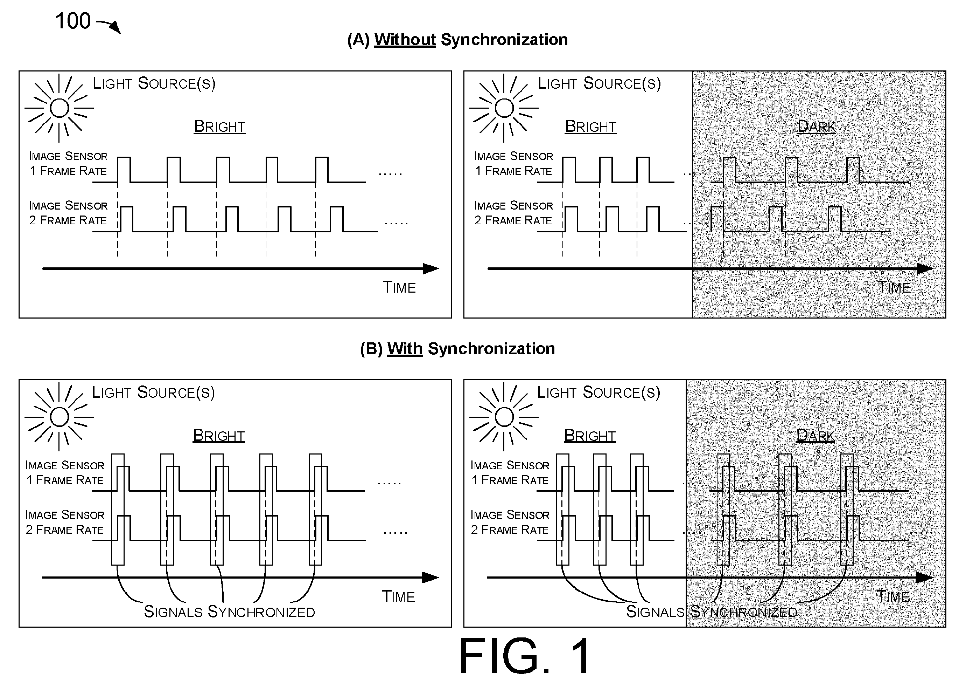

FIG. 1 depicts an example scenario 100 showing effects resulting from various techniques, algorithms and schemes in accordance with the present disclosure. Part (A) of scenario 100 depicts how the frame rates of two image sensors, a first image sensor and a second image sensor (labeled as "image sensor 1" and "image sensor 2" in FIG. 1, respectively), may become asynchronous to each other over time (e.g., "out of sync"). Part (B) of scenario 100 depicts how the frame rates of the first image sensor and second image sensor may be synchronized by various implementations in accordance with the present disclosure.

As shown in part (A) of scenario 100, when the ambient lighting is relatively bright such that little or no change in the exposure time for image sensors is required, a respective periodic timing control signal (e.g., vertical synchronization signal, or V_{Sync}) associated with each of the first image sensor and second image sensor may gradually become out of sync from each other over time. As the respective periodic timing control signal, or V_{Sync}, controls or otherwise affects the respective frame rate of each of the first image sensor and second image sensor, the frame rates of the first image sensor and second image sensor become out of sync over time. Thus, image frames outputted by the first image sensor and second image sensor may be out of sync for a dual-camera application that utilizes the images from both the first image sensor and the second image sensor, since the respective frame rates of the first image sensor and second image sensor are out of sync.

Also as shown in part (A) of scenario 100, when the ambient lighting changes from relatively bright to relatively dark such that the exposure time for the image sensors needs to change from relatively short to relatively long, the periodic timing control signals associated with the first image sensor and second image sensor may change to correspond to the change in exposure time, albeit at different times and/or at different paces. This may also result in the periodic timing control signals, or V_{Sync}, associated with the first image sensor and second image sensor become out of sync over time. Consequently, the frame rates of the first image sensor and second image sensor may be out of sync over time, and the image frames outputted by the first image sensor and second image sensor may be out of sync for a dual-camera application that utilizes the image frames from both the first image sensor and the second image sensor.

As shown in part (B) of scenario 100, when the ambient lighting changes from relatively bright to relatively dark such that the exposure time for the image sensors needs to change from relatively short to relatively long, the periodic timing control signals, or V_{Sync} , associated with the first image sensor and second image sensor may stay synchronized as a result of an implementation of an algorithm, scheme, technique and/or process in accordance with the present disclosure, despite any dynamic or constant variations in light source(s) and/or brightness in ambient lighting. Consequently, the frame rates of the first image sensor and second image sensor may stay synchronized over time, and the image frames outputted by the first image sensor and second image sensor may also stay synchronized for a dual-camera application that utilizes the image frames from both the first image sensor and the second image sensor.

Also as shown in part (B) of scenario 100, when the ambient lighting is relatively bright such that little or no change in the exposure time for image sensors is required, the periodic timing control signals, or V_{Sync}, associated with the first image sensor and second image sensor may stay synchronized as a result of an implementation of an algorithm, scheme, technique and/or process in accordance with the present disclosure. Consequently, the frame rates of the first image sensor and second image sensor may stay synchronized over time, and the image frames outputted by the first image sensor and second image sensor may also stay synchronized for a dual-camera application that utilizes the image frames from both the first image sensor and the second image sensor.

### Example Apparatus

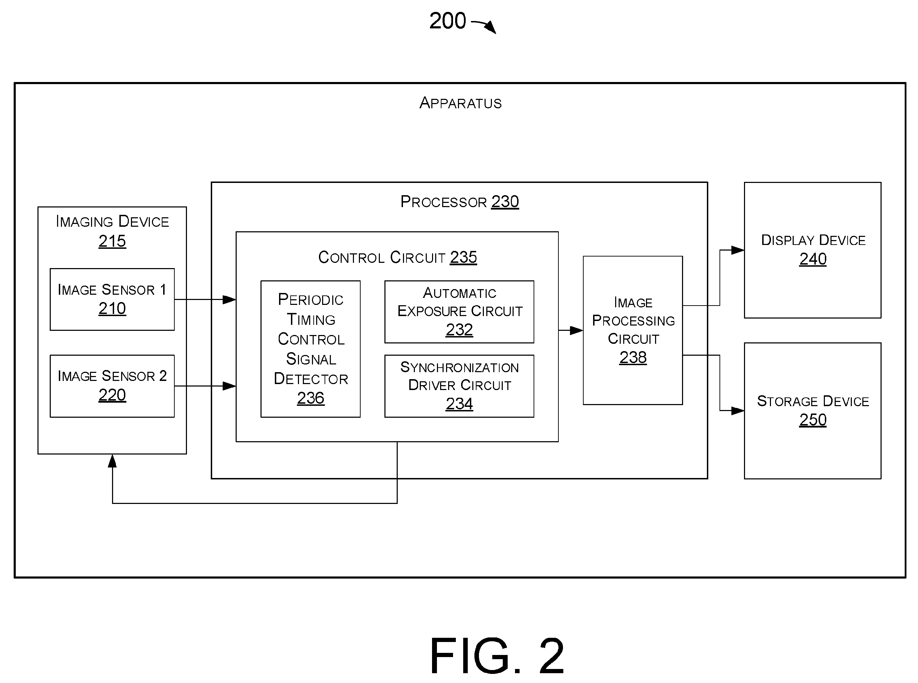

FIG. 2 depicts an example apparatus 200 in accordance with an implementations of the present disclosure. Apparatus 200 may perform, execute or otherwise carry out various functions, tasks and/or operations related to concepts, techniques, schemes, solutions, scenarios, algorithms, approaches, processes and methods described herein, including example scenario 100 described above as well as example functions 300, example algorithms 400 and 600, example schemes 500, 700 and 800 as well as example processes 1000 and 1100 described below. Apparatus 200 may include one, some or all of the components shown in FIG. 2. Apparatus 200 may optionally include additional component(s) not shown in FIG. 2. Such additional components are not relevant to the present disclosure, albeit necessary for the operation of apparatus 200, and thus are not shown in FIG. 2 so as to avoid obscuring the illustration.

Apparatus 200 may be an electronic apparatus which may be, for example and not limited to, a portable device (e.g., smartphone, personal digital assistant, digital camera and the like), a computing device (e.g., laptop computer, notebook computer, desktop computer, tablet computer and the like) or a wearable device (e.g., smartwatch, smart bracelet, smart necklace and the like). Alternatively, apparatus 200 may be implemented in the form of one or more integrated-circuit (IC) chips such as, for example and not limited to, one or more single-core processors, one or more multi-core processors, or one or more complex-instruction-set-computing (CISC) processors.

Apparatus 200 may include at least a processor 230, which is a special-purpose computing device designed and configured to perform, execute or otherwise carry out specialized algorithms, software instructions, computations and logics to render or otherwise effect image frame synchronization for dynamic frame rate in dual-camera applications in accordance with the present disclosure. That is, processor 230 may include specialized hardware (and, optionally, specialized firmware) specifically designed and configured to render or otherwise effect image frame synchronization for dynamic frame rate in dual-camera applications in one or more novel ways not previously existing or available.

Processor 230 may include at least a control circuit 235. In some implementations, control circuit 235 may include special-purpose circuitry including an automatic exposure (AE) circuit 232 and a synchronization driver circuit 234. Each of AE circuit 232 and synchronization driver circuit 234 may respectively include electronic components, including one or more transistors, one or more diodes, one or more capacitors, one or more resistors, one or more inductors, one or more memristors and/or one or more varactors, that are configured and arranged to achieve specific purposes in accordance with the present disclosure.

In some implementations, apparatus 200 may also include an imaging device 215. Imaging device 215 may be coupled to control circuit 235, and may be configured to capture still images, video images or a combination thereof. In some implementations, imaging device 215 may be a dual-camera imaging device include a first image sensor 210 and a second image sensor 220. Each of first image sensor 210 and second image sensor 220 may be configured to detect and convey imagery information, representative of an image, and provide the imagery information as image data to processor 230. In some implementations, each of first image sensor 210 and second image sensor 220 may respectively include a semiconductor charge-coupled device (CCD), a complementary metal-oxide-semiconductor (CMOS) type of active pixel sensor and/or an N-type metal-oxide-semiconductor (NMOS) type of active pixel sensor. In some implementations, first image sensor 210 may be configured to capture first images and provide first data representative of the first images at a first frame rate. Similarly, in some implementations, second image sensor 220 may be configured to capture second images and provide second data representative of the second images at a second frame rate.

In some implementations, control circuit 235 may also include a periodic timing control signal detector 236. Periodic timing control signal detector 236 may be coupled to imaging device 215, and may be configured to detect and analyze a respective periodic timing control signal (e.g., vertical synchronization signal, or V_{Sync}) associated with each of first image sensor 210 and second image sensor 220. For example, periodic timing control signal detector 236 may detect a first V_{Sync} signal associated with or otherwise controlling the frequency at which first image sensor 210 operates. Periodic timing control signal detector 236 may detect a second V_{Sync} signal associated with or otherwise controlling the frequency at which second image sensor 220 operates. Periodic timing control signal detector 236 may also analyze first V_{Sync} signal and second V_{Sync} signal to determine the periodicity or frequency of each of first V_{Sync} signal and second V_{Sync} signal.

Accordingly, processor 230 may receive first data representative of first images captured by first image sensor 210 as well as second data representative of second images captured by second image sensor 220. Moreover, processor 230 may control first frame rate of first image sensor 210 and second frame rate of second image sensor 220 in accordance with various implementations of the present disclosure. For instance, AE circuit 232 may be configured to detect a change in brightness in ambient lighting based at least in part on either or both of the first data and the second data received from first image sensor 210 and/ second image sensor 220. Moreover, AE circuit 232 may be configured to adjust an exposure time associated with a respective shutter of each of first image sensor 210 and the second image sensor 220. That is, AE circuit 232 may change the exposure time from a first exposure time to a second exposure time responsive to detecting the change in brightness in the ambient lighting. As an example, AE circuit 232 may change the exposure time from a relatively shorter exposure time to a relatively longer exposure time in response to detection of a decrease in the ambient lighting. As another example, AE circuit 232 may change the exposure time from a relatively longer exposure time to a relatively shorter exposure time in response to detection of an increase in the ambient lighting.

In accordance with various implementations of the present disclosure, including example algorithms 400 and 600, example schemes 500, 700 and 800 as well as example processes 1000 and 1100 described below and any variations and derivatives thereof, synchronization driver circuit 234 may be configured to synchronize the first frame rate and the second frame rate in response to the detected change in brightness in the ambient lighting. Some example ways in which synchronization driver circuit 234 may synchronize the first frame rate and the second frame rate of first image sensor 210 and second image sensor 220, respectively, are described below.

In some implementations, in synchronizing the first frame rate and the second frame rate, synchronization driver circuit 234 may be configured to detect a change in the second frame rate as a result of a change in the exposure time. Additionally, synchronization driver circuit 234 may be configured to adjust the first frame rate to synchronize the first frame rate and the second frame rate.

In some implementations, in adjusting the first frame rate to synchronize the first frame rate and the second frame rate, synchronization driver circuit 234 may be configured to perform a number of operations. For instance, synchronization driver circuit 234 may determine a difference between the first frame rate of the first image sensor and the second frame rate of the second image sensor. Additionally, synchronization driver circuit 234 may determine whether the difference between the first frame rate and the second frame rate is greater than a first threshold. Moreover, in response to a determination that the difference between the first frame rate and the second frame rate is greater than the first threshold, synchronization driver circuit 234 may determine whether the difference between the first frame rate and the second frame rate is less than a second threshold which is greater than the first threshold. In response to a determination that the difference between the first frame rate and the second frame rate is less than the second threshold and greater than the first threshold, synchronization driver circuit 234 may adjust the first frame rate to match the second frame rate. In response to a determination that the difference between the first frame rate and the second frame rate is less than the first threshold or greater than the second threshold, synchronization driver circuit 234 may monitor a change in the difference between the first frame rate and the second frame rate. Furthermore, upon the difference between the first frame rate and the second frame rate falling within a range between the first threshold and the second threshold, synchronization driver circuit 234 may adjust the first frame rate to match the second frame rate.

Alternatively, in adjusting the first frame rate to synchronize the first frame rate and the second frame rate, synchronization driver circuit 234 may be configured to determine the first frame rate, the second frame rate, and a difference between the first frame rate and the second frame rate. Moreover, synchronization driver circuit 234 may adjust the first frame rate to match the second frame rate.

In some implementations, in synchronizing the first frame rate and the second frame rate, AE circuit 232 and synchronization driver circuit 234 may collaborate with each other to achieve synchronization. AE circuit 232 and synchronization driver circuit 234 may be in constant or periodic communication with each other. For instance, synchronization driver circuit 234 may monitor the first frame rate and second frame rate, and determine a difference between the first frame rate and second frame rate. Synchronization driver circuit 234 may constantly or periodically communicate to or otherwise inform AE circuit 232 of the first frame rate, second frame rate, and difference between the first frame rate and second frame rate. As ambient lighting changes, thereby requiring adjustment to exposure time, AE circuit 232 may adjust the exposure time according to or otherwise taking into account of the first frame rate, second frame rate, and difference between the first frame rate and second frame rate. AE circuit 232 may provide an indication to synchronization driver circuit 234 regarding adjustment to be made or has been made to the exposure time. Synchronization driver circuit 234 may then adjust the first frame rate to match the second frame rate.

It is noteworthy that processor 230 of apparatus 200 may be configured to synchronize the frame rates of first image sensor 210 and second image sensor 220, and hence synchronize image frames provided by first image sensor 210 and second image sensor 220, under various situations with dynamic or constant variations in light source(s) and/or brightness in ambient lighting. That is, regardless whether it is a change from relatively bright to relatively dark in the ambient lighting, from relatively dark to relatively bright in the ambient lighting, a change in the direction of light source(s) or a change in the number of light source(s), processor 230 may synchronize the frame rates of, and image frames from, first image sensor 210 and second image sensor 220 in accordance with one or more of the algorithms, schemes, techniques and/or processes of the present disclosure.

In some implementations, apparatus 200 may include an image processing circuit 238, which may be an integral part of process 230 or a separate and discrete IC. In the example shown in FIG. 2, image processing circuit 238 is a part of processor 230. Image processing circuit 238 may perform signal processing on the first data and second data from first image sensor 210 and second image sensor 220 to provide corresponding image frame(s) of one or more still images and/or one or more video images.

In some implementations, apparatus 200 may include a display device 240. Display device 240 may be configured to display textual, graphical and/or video images. In some implementations, display device 240 may be a flat panel and/or a touch-sensing panel. Display device 240 may be implemented by any suitable technology such as, for example and not limited to, liquid crystal display (LCD), plasma display panel (PDP), light-emitting diode display (LED), organic light-emitting diode (OLED), electroluminescent display (ELD), surface-conduction electron-emitter display (SED), field emission display (FED), laser, carbon nanotubes, quantum dot display, interferometric modulator display (IMOD) and digital micro-shutter display (DMS). Image processing circuit 238 may be operatively coupled to display device 240 to provide digital data of processed still image(s) and/or video image(s) to be displayed by display device 240.

In some implementations, apparatus 200 may include a storage device 250. Storage device 250 may be configured to store one or more sets of instruction and data therein. For example, storage device 250 may be operatively coupled to image processing circuit 238 to receive the processed still image(s) and/or video image(s) to store in storage device 250. Storage device 250 may be implemented by any suitable technology and may include volatile memory and/or non-volatile memory. For example, storage device 250 may include a type of random access memory (RAM) such as dynamic RAM (DRAM), static RAM (SRAM), thyristor RAM (T-RAM) and/or zero-capacitor RAM (Z-RAM). Alternatively or additionally, storage device 250 may include a type of read-only memory (ROM) such as mask ROM, programmable ROM (PROM), erasable programmable ROM (EPROM) and/or electrically erasable programmable ROM (EEPROM). Alternatively or additionally, storage device 250 may include a type of non-volatile random-access memory (NVRAM) such as flash memory, solid-state memory, ferroelectric RAM (FeRAM), magnetoresistive RAM (MRAM) and/or phase-change memory.

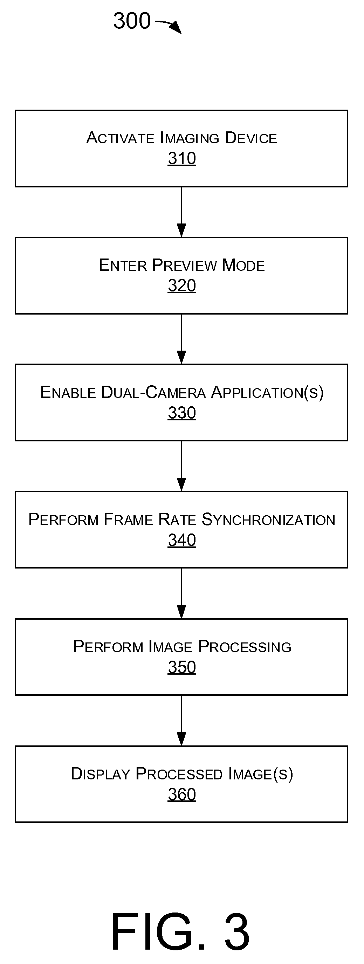

FIG. 3 depicts an example set of functions 300 of the example apparatus of FIG. 2 in accordance with an implementations of the present disclosure. The set of functions 300 may include one or more operations, actions, or functions performed, executed or otherwise carried out by apparatus 200, as represented by one or more of blocks 310, 320, 330, 340, 350 and 360. Although illustrated as discrete blocks, various blocks of the set of functions 300 may be divided into additional blocks, combined into fewer blocks, or eliminated, depending on the desired implementation. The set of functions 300 may be implemented by apparatus 200 in rendering or otherwise effecting image frame synchronization for dynamic frame rate in dual-camera applications in accordance with the present disclosure.

At 310, processor 230 of apparatus 200 may turn on, start, or otherwise activate imaging device 215. As a result, first image sensor 210 and second image sensor 220 may begin to capture still images and/or video images.

At 320, processor 230 of apparatus 200 may enter a preview mode. As a result, still image(s) and/or video image(s) captured by either or both of first image sensor 210 and second image sensor 220 may be displayed by display device 240 for preview by a user of apparatus 200.

At 330, processor 230 of apparatus 200 may, whether automatically or upon receiving a user command, enable one or more dual-camera applications. For example, a dual-camera application may be enabled or otherwise launched for one or more features, including and not limited to, creation of field depth, enhancement of dark-environment photography, increase in optical zoom and 3D image capture.

At 340, processor 230 of apparatus 200 may perform frame rate synchronization in one or more ways in accordance with the present disclosure.

At 350, image processing circuit 238 of apparatus 200 may perform image processing on the still image(s) and/or video image(s) captured by first image sensor 210 and second image sensor 220.

At 360, display device 240 of apparatus 200 may display the processed still image(s) and/or video image(s).

### Example Algorithms and Schemes

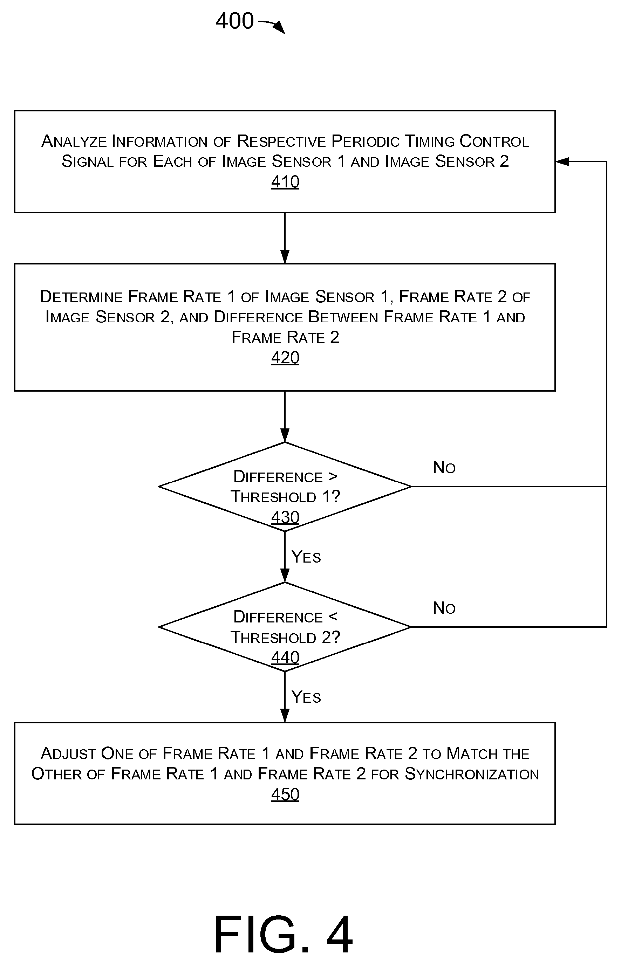

FIG. 4 depicts an example algorithm 400 that effects image frame synchronization for dynamic frame rate in dual-camera applications in accordance with an implementation of the present disclosure. Algorithm 400 may include one or more operations, actions, or functions as represented by one or more of blocks 410, 420, 430, 440 and 450. Although illustrated as discrete blocks, various blocks of algorithm 400 may be divided into additional blocks, combined into fewer blocks, or eliminated, depending on the desired implementation. Algorithm 400 may be implemented by apparatus 200 or any variations or derivatives thereof. Algorithm 400 may begin at 410.

At 410, algorithm 400 may involve analysis of information on a respective timing control signal (e.g., V_{Sync}) associated with each of a first image sensor and a second image sensor (denoted as "image sensor 1" and "image sensor 2" in FIG. 4, respectively). Algorithm 400 may proceed from 410 to 420.

At 420, algorithm 400 may involve determination of a first frame rate of the first image sensor (denoted as "frame rate 1" in FIG. 4) and a second frame rate of the second image sensor (denoted as "frame rate 2" in FIG. 4), as well as a difference between the first frame rate and second frame rate. The first frame rate and second frame rate may be determined based on the information of the periodic timing control signals of the first image sensor and second image sensor. Algorithm 400 may proceed from 420 to 430.

At 430, algorithm 400 may involve determination of whether the difference between the first frame rate and second frame rate is greater than a first threshold (denoted as "threshold 1" in FIG. 4). In an event that the difference between the first frame rate and second frame rate is greater than the first threshold, algorithm 400 may proceed from 430 to 440. Otherwise, in an event that the difference between the first frame rate and second frame rate is not greater than the first threshold (e.g., less than or equal to the first threshold), algorithm 400 may proceed from 430 to 410 to continue to monitor changes in the periodic timing control signals (and, hence, the frame rates) associated with the first image sensor and second image sensor.

At 440, algorithm 400 may involve determination of whether the difference between the first frame rate and second frame rate is less than a second threshold (denoted as "threshold 2" in FIG. 4). In an event that the difference between the first frame rate and second frame rate is less than the second threshold, algorithm 400 may proceed from 440 to 450. Otherwise, in an event that the difference between the first frame rate and second frame rate is not less than the second threshold (e.g., greater than or equal to the second threshold), algorithm 400 may proceed from 440 to 410 to continue to monitor changes in the periodic timing control signals (and, hence, the frame rates) associated with the first image sensor and second image sensor.

At 450, algorithm 400 may involve adjustment of one of the first frame rate and second frame rate to match the other of the first frame rate and second frame rate, so as to achieve synchronization, when the difference between the first frame rate and the second frame rate is within a range between the first threshold and the second threshold.

For example, assuming the first frame rate of first image sensor changes from 30 frames per second (fps) to 15 fps due to an increase in exposure rate due to the ambient lighting changing from relatively bright to relatively dark, and assuming the threshold range is 10 fps, algorithm 400 may adjust the second frame rate of second image sensor to 15 fps to match that of the first image sensor in an event that the second frame rate of second image sensor has not yet change to 15 fps. As another example, assuming the first frame rate of first image sensor changes from 15 fps to 30 fps due to a decrease in exposure rate due to the ambient lighting changing from relatively dark to relatively bright, and assuming the threshold range is 10 fps, algorithm 400 may adjust the second frame rate of second image sensor to 30 fps to match that of the first image sensor in an event that the second frame rate of second image sensor has not yet change to 30 fps.

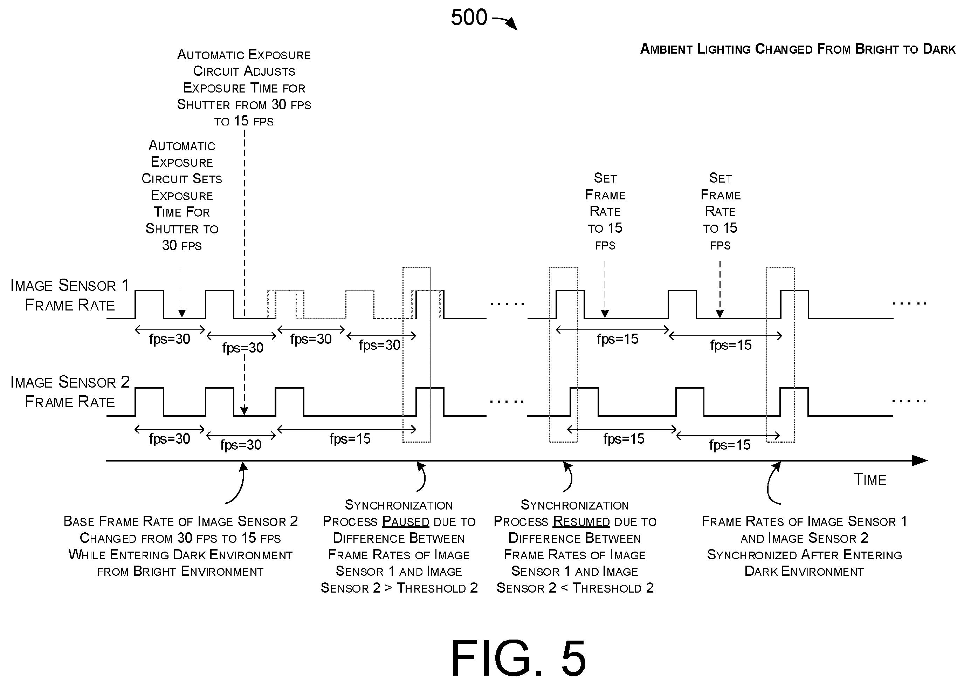

FIG. 5 depicts two example scenarios 500 of image frame synchronization for dynamic frame rate in dual-camera applications in accordance with an implementation of the present disclosure. Scenarios 500 may be an illustration of an example implementation of algorithm 400, or any variations and/or derivatives thereof, by apparatus 200. On the left hand side of FIG. 5, regardless of whether the ambient lighting is changing from relatively bright to relatively dark or from relatively dark to relatively bright, the synchronization procedure would pause, halt or otherwise suspend in an event that the difference between the frame rates of the first image sensor and second image sensor is excessive (e.g., greater than a high threshold). On the right hand side of FIG. 5, when and in an event that the difference between the frame rates of the first image sensor and second image sensor is within an acceptable range (e.g., between a low threshold and the high threshold), the synchronization procedure is resumed.

Solely for illustrative purposes and without limitation, in scenarios 500 the ambient lighting changes from being relatively bright to relatively dark (e.g., apparatus 200 is moved by a user from a bright environment, such as outdoors, to a dark environment, such as indoors). In the example shown in scenarios 500, the first frame rate of first image sensor 210 is adjusted to match the second frame rate of second image sensor 220 for synchronization, and an example procedure undertaken in scenarios 500 is described below.

In scenarios 500, both the first frame rate of first image sensor 210 and the second frame rate of second image sensor 220 are initially at 30 fps. As processor 230 detects a change in the ambient lighting from being relatively bright to relatively dark (e.g., based on data received from first image sensor 210 and/or second image sensor 220), AE circuit 232 adjusts an exposure time associated with second image sensor 220 from a first exposure time (corresponding to 30 fps) to a second exposure time (corresponding to 15 fps) in response to the detection of the change in brightness in ambient lighting. As a result, in scenarios 500, upon receiving an indication from AE circuit 232 regarding the adjustment in exposure time, the second frame rate of second image sensor 220 starts to change from 30 fps to 15 fps as apparatus 200 enters the dark environment from the bright environment. On the other hand, in scenarios 500, the first frame rate of first image sensor 210 remains at 30 fps. For example, first image sensor 210 may continue to receive a periodic control signal from processor 230 that sets the frame rate of first image sensor 210 to 30 fps. Synchronization driver circuit 234 monitors the first frame rate and second frame rate, and initiates synchronization procedure upon the difference between the first frame rate and second frame rate exceeds a first threshold or threshold 1 (e.g., 5 fps). However, as the difference the first frame rate and second frame rate increases beyond a second threshold or threshold 2 (e.g., 12 fps), synchronization driver circuit 234 pauses, halts or otherwise suspends the synchronization procedure while continuing to monitor the first frame rate and second frame rate. Eventually, when the difference between the first frame rate and second frame rate falls within a range between the first threshold and the second threshold (e.g., between 5 fps and 12 fps), synchronization driver circuit 234 resumes the synchronization procedure to result in the first frame rate and second frame rate being synchronized after apparatus 200 enters the dark environment.

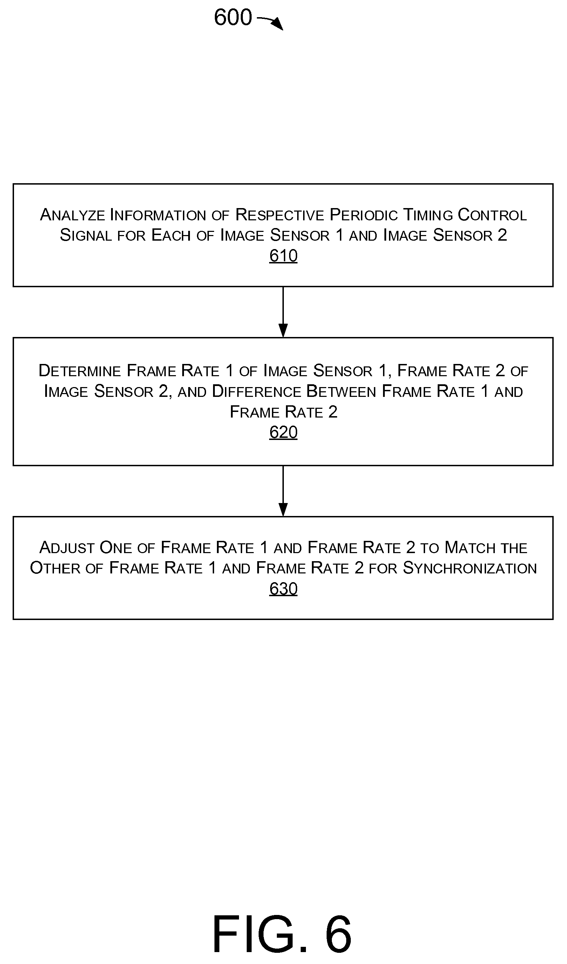

FIG. 6 depicts an example algorithm 600 that effects image frame synchronization for dynamic frame rate in dual-camera applications in accordance with an implementation of the present disclosure. Algorithm 600 may include one or more operations, actions, or functions as represented by one or more of blocks 610, 620 and 630. Although illustrated as discrete blocks, various blocks of algorithm 600 may be divided into additional blocks, combined into fewer blocks, or eliminated, depending on the desired implementation. Algorithm 600 may be implemented by apparatus 200 or any variations or derivatives thereof. Algorithm 600 may begin at 610.

At 610, algorithm 600 may involve analysis of information on a respective timing control signal (e.g., V_{Sync}) associated with each of a first image sensor and a second image sensor (denoted as "image sensor 1" and "image sensor 2" in FIG. 6, respectively). Algorithm 600 may proceed from 610 to 620.

At 620, algorithm 600 may involve determination of a first frame rate of the first image sensor (denoted as "frame rate 1" in FIG. 6) and a second frame rate of the second image sensor (denoted as "frame rate 2" in FIG. 6), as well as a difference between the first frame rate and second frame rate. In particular, the difference between a signal pull up time for the first frame rate and a signal pull up time for the second frame rate is determined. Referring to scenarios 500 of FIG. 5 for example, on the left hand side of FIG. 5 at the time when synchronization process is paused the difference is 15 fps, and on the right hand side of FIG. 5 at the time when synchronization process is resumed the difference is between threshold 1 and threshold 2. The first frame rate and second frame rate may be determined based on the information of the periodic timing control signals of the first image sensor and second image sensor. Algorithm 600 may proceed from 620 to 630.

At 630, algorithm 600 may involve adjustment of one of the first frame rate and second frame rate to match the other of the first frame rate and second frame rate, so as to achieve synchronization.

For example, assuming the first frame rate of first image sensor changes from 30 frames per second (fps) to 15 fps due to an increase in exposure rate due to the ambient lighting changing from relatively bright to relatively dark, algorithm 400 may adjust the second frame rate of second image sensor to 15 fps to match that of the first image sensor in an event that the second frame rate of second image sensor has not yet change to 15 fps (e.g., from 30 fps). As another example, assuming the first frame rate of first image sensor changes from 15 fps to 30 fps due to a decrease in exposure rate due to the ambient lighting changing from relatively dark to relatively bright, algorithm 400 may adjust the second frame rate of second image sensor to 30 fps to match that of the first image sensor in an event that the second frame rate of second image sensor has not yet change to 30 fps (e.g., from 15 fps).

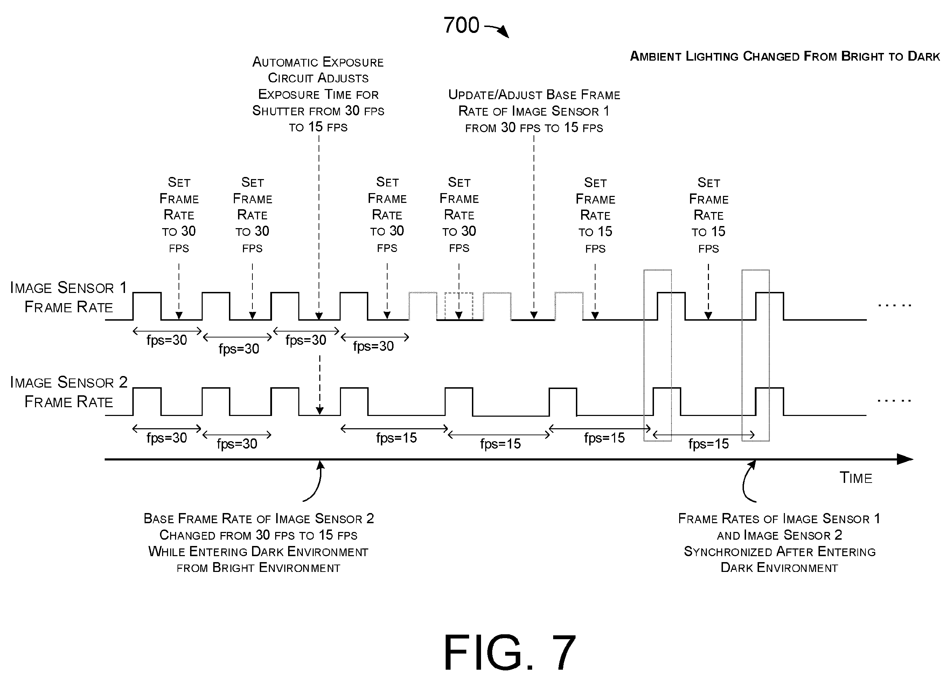

FIG. 7 depicts an example scenario 700 of image frame synchronization for dynamic frame rate in dual-camera applications in accordance with another implementation of the present disclosure. Scenario 700 may be an illustration of an example implementation of algorithm 600, or any variations and/or derivatives thereof, by apparatus 200. In scenario 700, regardless of whether the ambient lighting is changing from relatively bright to relatively dark or from relatively dark to relatively bright, the frame rates are synchronized when one of the frame rate is updated to the value of the other frame rate, which is used as a base frame rate.

Solely for illustrative purposes and without limitation, in scenario 700 the ambient lighting changes from being relatively bright to relatively dark (e.g., apparatus 200 is moved by a user from a bright environment, such as outdoors, to a dark environment, such as indoors). In the example shown in scenario 700, the first frame rate of first image sensor 210 is adjusted to match the second frame rate of second image sensor 220 for synchronization, and an example procedure undertaken in scenario 700 is described below.

In scenario 700, both the first frame rate of first image sensor 210 and the second frame rate of second image sensor 220 are initially at 30 fps. As processor 230 detects a change in the ambient lighting from being relatively bright to relatively dark (e.g., based on data received from first image sensor 210 and/or second image sensor 220), AE circuit 232 adjusts an exposure time associated with first image sensor 210 and second image sensor 220 from a first exposure time (corresponding to 30 fps) to a second exposure time (corresponding to 15 fps) in response to the detection of the change in brightness in ambient lighting. As a result, in scenario 700, upon receiving an indication from AE circuit 232 regarding the adjustment in exposure time, the second frame rate of second image sensor 220 starts to change from 30 fps to 15 fps as apparatus 200 enters the dark environment from the bright environment. On the other hand, in scenario 700, the first frame rate of first image sensor 210 remains at 30 fps. For example, first image sensor 210 may continue to receive a periodic control signal from processor 230 that sets the frame rate of first image sensor 210 to 30 fps. Synchronization driver circuit 234 monitors the first frame rate and second frame rate, and initiates synchronization procedure upon detecting a difference between the first frame rate and second frame rate. As the second frame rate changes from a previous value of 30 fps and settles on a new value of 15 fps, synchronization driver circuit 234 determines that the new value of 15 fps as the base rate. Accordingly, synchronization driver circuit 234 updates the first frame rate to the base value, thereby synchronizing the first frame rate and second frame rate after apparatus 200 enters the dark environment.

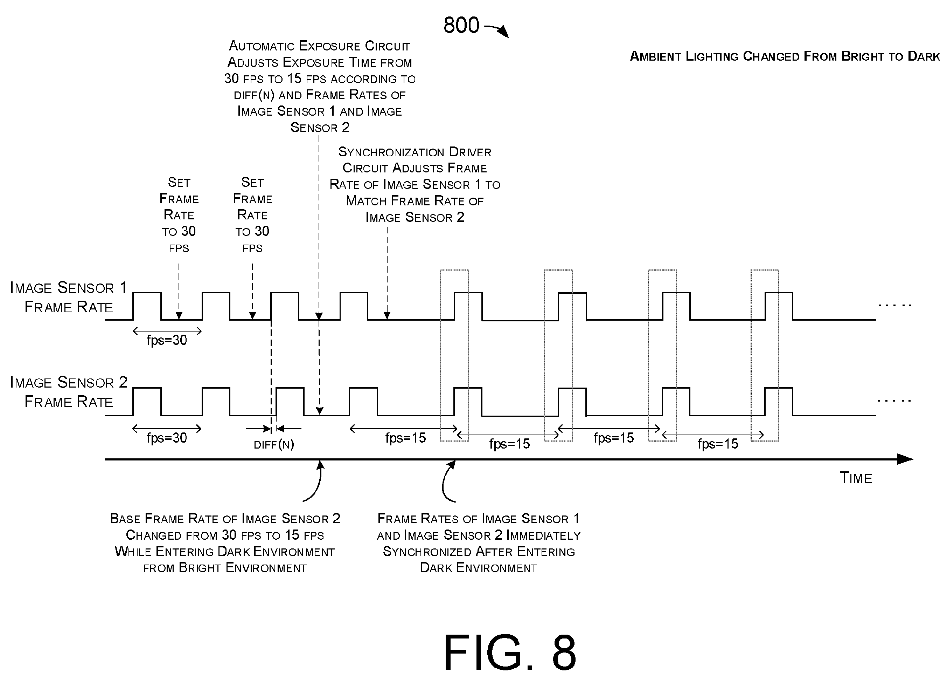

FIG. 8 depicts an example scenario 800 of image frame synchronization for dynamic frame rate in dual-camera applications in accordance with another implementation of the present disclosure. Scenario 800 may be implemented by apparatus 200. In scenario 800, regardless of whether the ambient lighting is changing from relatively bright to relatively dark or from relatively dark to relatively bright, t as the ambient lighting changes he frame rates are synchronized immediately due to AE circuit 232 and synchronization driver circuit 234 collaborating with each other.

Solely for illustrative purposes and without limitation, in scenario 800 the ambient lighting changes from being relatively bright to relatively dark (e.g., apparatus 200 is moved by a user from a bright environment, such as outdoors, to a dark environment, such as indoors). In the example shown in scenario 800, the first frame rate of first image sensor 210 is adjusted to match the second frame rate of second image sensor 220 for synchronization, and an example procedure undertaken in scenario 800 is described below.

In scenario 800, both the first frame rate of first image sensor 210 and the second frame rate of second image sensor 220 are initially at 30 fps. As processor 230 detects a change in the ambient lighting from being relatively bright to relatively dark (e.g., based on data received from first image sensor 210 and/or second image sensor 220),

Synchronization driver circuit 234 monitors the first frame rate and second frame rate, and determines a difference between the first frame rate and second frame rate. Synchronization driver circuit 234 also communicates to or otherwise informs AE circuit 232 of the first frame rate, second frame rate, and difference between the first frame rate and second frame rate. As ambient lighting changes, thereby requiring adjustment to exposure time, AE circuit 232 adjusts the exposure time according to or otherwise taking into account of the first frame rate, second frame rate, and difference between the first frame rate and second frame rate. For example, AE circuit 232 adjusts the exposure time associated with first image sensor 210 and second image sensor 220 from a first exposure time (corresponding to 30 fps) to a second exposure time (corresponding to 15 fps) in response to the detection of the change in brightness in ambient lighting. AE circuit 232 communicates to or otherwise informs synchronization driver circuit 234 of the adjustment made to the exposure time. Synchronization driver circuit 234 then adjusts the first frame rate to match the second frame rate.

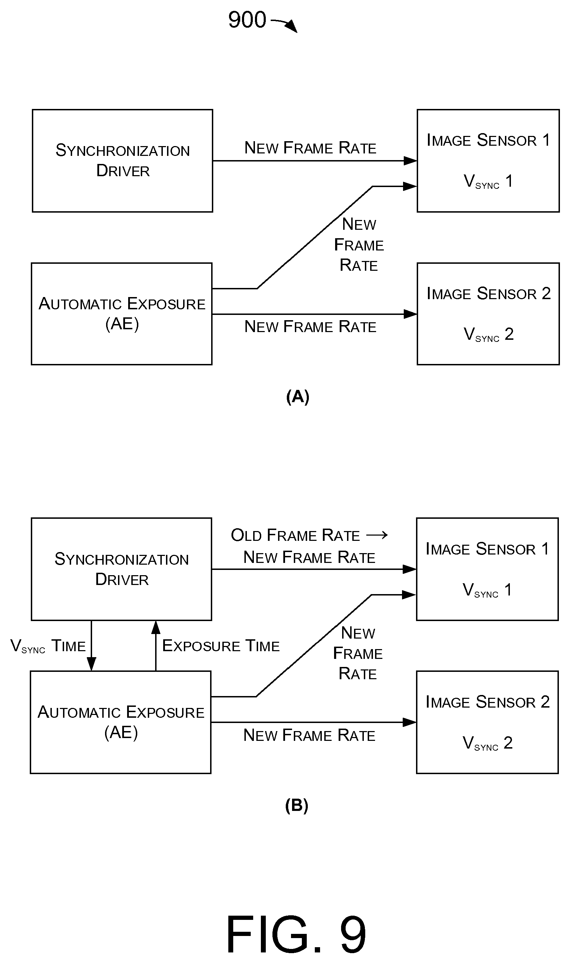

FIG. 9 depicts an example scenario 900 pertaining to image frame synchronization for dynamic frame rate in dual-camera applications in accordance with various implementations of the present disclosure. Each of part (A) and part (B) of scenario 900 is illustrated with a number of functional blocks, including synchronization driver (e.g., representing synchronization driver circuit 234), automatic exposure (e.g., representing AE circuit 232), image sensor 1 (e.g., representing first image sensor 210) and image sensor 2 (e.g., representing second image sensor 220).

Part (A) of scenario 900 illustrates an approach to image frame synchronization without AE and synchronization driver collaborating with each other, as in algorithm 400, scenario 500, algorithm 600 and scenario 700. Under this approach, AE and synchronization driver operate independently of each other. AE may indicate to each of image sensor 1 and image sensor 2 a need to change frame rate, as a result of adjustment to exposure time due to a change in ambient lighting. Without this knowledge, synchronization driver may independently and separately determine a difference between the first frame rate and second frame rate. In the example shown in part (A) of scenario 900, synchronization driver may use the second frame rate as a base rate to adjust the first frame rate. For example, synchronization driver may update the first frame rate to the value of the second frame rate to achieve synchronization.

Part (B) of scenario 900 illustrates another approach to image frame synchronization with AE and synchronization driver collaborating with each other, as in scenario 800. Under this approach, AE and synchronization driver may be in constant or periodic communication with each other. Synchronization driver may provide information on the first frame rate (e.g., timing information on V_{Sync} associated with image sensor 1), second frame rate (e.g., timing information on V_{Sync} associated with image sensor 2) and difference between the first frame rate and second frame rate to AE. AE may provide information on exposure time (e.g., adjustment to exposure time or the new value of the exposure time) to synchronization driver. AE may adjust the exposure time by taking into account the first frame rate, second frame rate and difference between the first frame rate and second frame rate. AE may indicate to each of image sensor 1 and image sensor 2 a need to change frame rate, as a result of adjustment to exposure time due to a change in ambient lighting. Synchronization driver may utilize the second frame rate as a base frame rate, and update the first frame rate to the value of the second frame rate to achieve synchronization.

### Example Processes

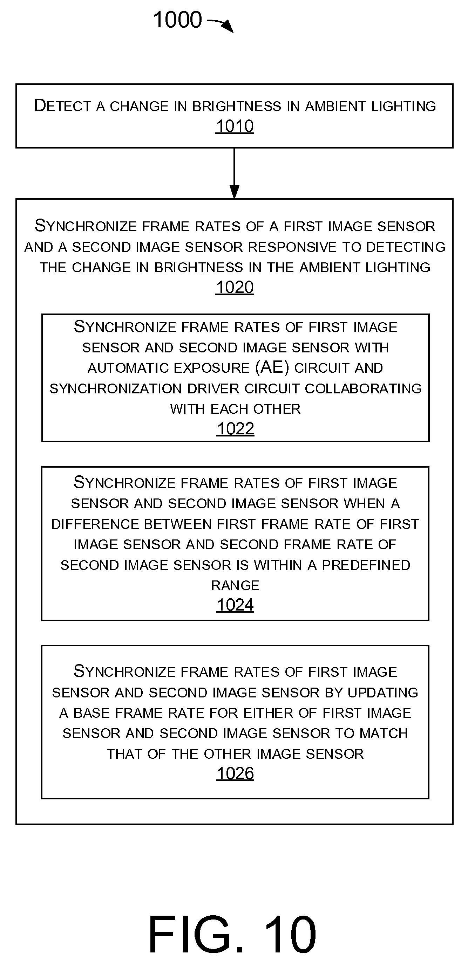

FIG. 10 depicts an example process 1000 pertaining to image frame synchronization for dynamic frame rate in dual-camera applications in accordance with an implementation of the present disclosure. Process 1000 may include one or more operations, actions, or functions as represented by one or more of blocks 1010 and 1020 as well as sub-blocks 1022, 1024 and 1026. Although illustrated as discrete blocks, various blocks of process 1000 may be divided into additional blocks, combined into fewer blocks, or eliminated, depending on the desired implementation. The blocks and sub-blocks of process 1000 may be performed in the order shown in FIG. 10 or in any other order, depending on the desired implementation. Process 1000 may be implemented by apparatus 200 and any variations and/or derivatives thereof. Process 1000 may be an example implementation of each of algorithm 400, scenario 500, algorithm 600, scenario 700 and scenario 800, whether partially or completely. Solely for illustrative purposes and without limitation, process 1000 is described below in the context of apparatus 200. Process 1000 may begin at block 1010.

At 1010, process 1000 may involve processor 230 of apparatus 200 detecting a change in brightness in ambient lighting when apparatus 200 operates in a dual-camera mode utilizing images captured by first image sensor 210 and second image sensor 220. For instance, processor 230 may detect the change in brightness in the ambient lighting based on first data received from first image sensor 210 and/or second data received from second image sensor 220. Process 1000 may proceed from 1010 to 1020.

At 1020, process 1000 may involve processor 230 synchronizing frame rates of first image sensor 210 and second image sensor 220 responsive to detecting the change in brightness in the ambient lighting. This may involve process 1000 performing one or more of sub-blocks 1022, 1024 and 1026.

At 1022, process 1000 may involve processor 230 synchronizing the frame rates of first image sensor 210 and second image sensor 220 with AE circuit 232 and synchronization driver circuit 234 collaborating with each other. That is, process 1000 may implement scenario 800 in synchronizing the frame rates of first image sensor 210 and second image sensor 220, as described below.

In some embodiments, process 1000 may involve synchronization driver circuit 234 determining the first frame rate of the first image sensor, the second frame rate of the second image sensor, and a difference between the first frame rate and the second frame rate. Process 1000 may also involve synchronization driver circuit 234 communicating to AE circuit 232 the first frame rate, the second frame rate, and the difference between the first frame rate and the second frame rate. Process 1000 may involve AE circuit 232 adjusting an exposure time associated with first image sensor 210 and second image sensor 220 from a first exposure time to a second exposure time responsive to the detecting. In response to AE circuit 232 adjusting the exposure time, the second frame rate of the second image sensor may change from a first value corresponding to the first exposure time to a second value corresponding to the second exposure time. Process 1000 may also involve AE circuit 232 providing to the synchronization driver circuit 234 an indication that the exposure time is adjusted. Process 1000 may further involve synchronization driver circuit 234 adjusting the first frame rate to match the second frame rate. For instance, process 1000 may involve synchronization driver circuit 234 setting the first frame rate of first image sensor 210 to the current frame rate of second image sensor 220.

At 1024, process 1000 may involve processor 230 synchronizing the frame rates of first image sensor 210 and second image sensor 220 when a difference between a first frame rate of first image sensor 210 and a second frame rate of second image sensor 220 is within a predefined range. That is, process 1000 may implement algorithm 400 and scenario 500 in synchronizing the frame rates of first image sensor 210 and second image sensor 220, as described below.

In some embodiments, in synchronizing the frame rates of first image sensor 210 and second image sensor 220, process 1000 may involve AE circuit 232 adjusting an exposure time associated with first image sensor 210 and second image sensor 220 from a first exposure time to a second exposure time responsive to the detecting. In response to AE circuit 232 adjusting the exposure time, the second frame rate of second image sensor 220 may change from a first value corresponding to the first exposure time to a second value corresponding to the second exposure time. Process 1000 may involve synchronization driver circuit 234 determining a difference between a first frame rate of first image sensor 210 and the second frame rate of second image sensor 220. Process 1000 may then involve synchronization driver circuit 234 determining whether the difference between the first frame rate and the second frame rate is greater than a first threshold. In response to a determination that the difference between the first frame rate and the second frame rate is greater than the first threshold, process 1000 may involve synchronization driver circuit 234 determining whether the difference between the first frame rate and the second frame rate is less than a second threshold which is greater than the first threshold. In response to a determination that the difference between the first frame rate and the second frame rate is less than the second threshold and greater than the first threshold, process 1000 may involve synchronization driver circuit 234 adjusting the first frame rate to match the second frame rate. For instance, process 1000 may involve synchronization driver circuit 234 setting the first frame rate of first image sensor 210 to the current frame rate of second image sensor 220.

In some embodiments, in synchronizing the frame rates of first image sensor 210 and second image sensor 220, process 1000 may involve synchronization driver circuit 234 monitoring a change in the difference between the first frame rate and the second frame rate, in response to a determination that the difference between the first frame rate and the second frame rate is less than the first threshold or greater than the second threshold. Moreover, process 1000 may involve synchronization driver circuit 234 adjusting the first frame rate to match the second frame rate upon the difference between the first frame rate and the second frame rate falling within a range between the first threshold and the second threshold. For instance, process 1000 may involve synchronization driver circuit 234 setting the first frame rate of first image sensor 210 to the current frame rate of second image sensor 220.

At 1026, process 1000 may involve processor 230 synchronizing the frame rates of first image sensor 210 and second image sensor 220 by updating the frame rate of either of first image sensor 210 and second image sensor 220 to match that of the other image sensor. That is, process 1000 may implement algorithm 600 and scenario 700 in synchronizing the frame rates of first image sensor 210 and second image sensor 220, as described below.

In some embodiments, in synchronizing the frame rates of first image sensor 210 and second image sensor 220, process 1000 may involve AE circuit 232 adjusting the exposure time associated with first image sensor 210 and second image sensor 220 from a first exposure time to a second exposure time responsive to the detecting. In response to AE circuit 232 adjusting the exposure time, the second frame rate of second image sensor 220 may change from a first value corresponding to the first exposure time to a second value corresponding to the second exposure time. Correspondingly, in synchronizing the frame rates of first image sensor 210 and second image sensor 220, process 1000 may involve synchronization driver circuit 234 determining the first frame rate of first image sensor 210, the second frame rate of second image sensor 220, and a difference between the first frame rate and the second frame rate. Additionally, process 1000 may involve synchronization driver circuit 234 adjusting the first frame rate to match the second frame rate. For instance, process 1000 may involve synchronization driver circuit 234 setting the first frame rate of first image sensor 210 to the current frame rate of second image sensor 220.

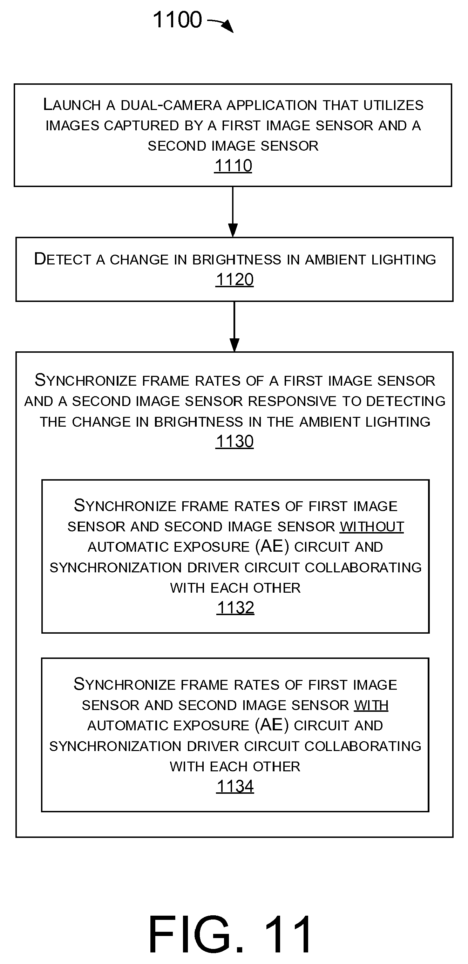

FIG. 11 depicts an example process 1100 pertaining to image frame synchronization for dynamic frame rate in dual-camera applications in accordance with an implementation of the present disclosure. Process 1100 may include one or more operations, actions, or functions as represented by one or more of blocks 1110, 1120 and 1130 as well as sub-blocks 1132 and 1134. Although illustrated as discrete blocks, various blocks of process 1100 may be divided into additional blocks, combined into fewer blocks, or eliminated, depending on the desired implementation. The blocks and sub-blocks of process 1100 may be performed in the order shown in FIG. 11 or in any other order, depending on the desired implementation. Process 1100 may be implemented by apparatus 200 and any variations and/or derivatives thereof. Process 1100 may be an example implementation of each of algorithm 400, scenario 500, algorithm 600, scenario 700 and scenario 800, whether partially or completely. Solely for illustrative purposes and without limitation, process 1100 is described below in the context of apparatus 200. Process 1100 may begin at block 1110.

At 1110, process 1100 may involve processor 230 of apparatus 200 launching a dual-camera application that utilizes images captured by first image sensor 210 and second image sensor 220. Process 1100 may proceed from 1110 to 1120.

At 1120, process 1100 may involve processor 230 detecting a change in brightness in ambient lighting. For instance, processor 230 may detect the change in brightness in the ambient lighting based on first data received from first image sensor 210 and/or second data received from second image sensor 220. Process 1100 may proceed from 1120 to 1130.

At 1130, process 1100 may involve processor 230 synchronizing a first frame rate of first image sensor 210 and a second frame rate of second image sensor 220 in response to detecting the change in brightness in the ambient lighting. This may involve process 1000 performing one or more of sub-blocks 1132 and 1134.

At 1132, process 1100 may involve processor 230 synchronizing the first frame rate of first image sensor 210 and the second frame rate of second image sensor 220 without AE circuit 232 and synchronization driver circuit 234 collaborating with each other. For instance, process 1100 may involve synchronization driver circuit 234 determining a change in the second frame rate as a result of a change in an exposure time by AE circuit 232 due to the detected change in brightness in the ambient lighting. Moreover, process 1100 may involve synchronization driver circuit 234 adjusting the first frame rate to synchronize the first frame rate and the second frame rate. At 1132, process 1100 may implement algorithm 400/scenario 500 or algorithm 600/scenario 700 in synchronizing the frame rates of first image sensor 210 and second image sensor 220.

Under algorithm 400 and scenario 500, process 1100 may involve processor 230 synchronizing the frame rates of first image sensor 210 and second image sensor 220 when a difference between a first frame rate of first image sensor 210 and a second frame rate of second image sensor 220 is within a predefined range, as described below.

In some embodiments, in adjusting the first frame rate to synchronize the first frame rate and the second frame rate, process 1100 may involve synchronization driver circuit 234 determining a difference between the first frame rate and the second frame rate. Process 1100 may also involve synchronization driver circuit 234 determining whether the difference between the first frame rate and the second frame rate is greater than a first threshold. In an event that the difference between the first frame rate and the second frame rate is greater than the first threshold, process 1100 may involve synchronization driver circuit 234 determining whether the difference between the first frame rate and the second frame rate is less than a second threshold which is greater than the first threshold. In an event that the difference between the first frame rate and the second frame rate is less than the second threshold and greater than the first threshold, process 1100 may involve synchronization driver circuit 234 adjusting the first frame rate to match the second frame rate. For instance, process 1000 may involve synchronization driver circuit 234 setting the first frame rate of first image sensor 210 to the current frame rate of second image sensor 220.

In some embodiments, in adjusting the first frame rate to synchronize the first frame rate and the second frame rate, process 1100 may further involve synchronization driver circuit 234 monitoring a change in the difference between the first frame rate and the second frame rate, in an event that the difference between the first frame rate and the second frame rate is less than the first threshold or greater than the second threshold. Additionally, process 1100 may involve synchronization driver circuit 234 adjusting the first frame rate to match the second frame rate upon the difference between the first frame rate and the second frame rate falling within a range between the first threshold and the second threshold.

Under algorithm 600 and scenario 700, process 1100 may involve processor 230 synchronizing the frame rates of first image sensor 210 and second image sensor 220 by updating the frame rate of either of first image sensor 210 and second image sensor 220 to match that of the other image sensor, as described below.

In some embodiments, in adjusting the first frame rate to synchronize the first frame rate and the second frame rate, process 1100 may involve synchronization driver circuit 234 determining the first frame rate, the second frame rate, and a difference between the first frame rate and the second frame rate. Moreover, process 1100 may involve synchronization driver circuit 234 adjusting the first frame rate to match the second frame rate. For instance, process 1000 may involve synchronization driver circuit 234 setting the first frame rate of first image sensor 210 to the current frame rate of second image sensor 220.

At 1134, process 1100 may involve processor 230 synchronizing the first frame rate of first image sensor 210 and the second frame rate of second image sensor 220 with AE circuit 232 and synchronization driver circuit 234 collaborating with each other. That is, process 1100 may implement scenario 800 in synchronizing the frame rates of first image sensor 210 and second image sensor 220, as described below.

In some embodiments, process 1100 may involve synchronization driver circuit 234 determining the first frame rate of the first image sensor, the second frame rate of the second image sensor, and a difference between the first frame rate and the second frame rate. Process 1100 may also involve synchronization driver circuit 234 communicating to AE circuit 232 the first frame rate, the second frame rate, and the difference between the first frame rate and the second frame rate. Process 1100 may involve AE circuit 232 adjusting an exposure time associated with first image sensor 210 and second image sensor 220 from a first exposure time to a second exposure time responsive to the detecting. In response to AE circuit 232 adjusting the exposure time, the second frame rate of the second image sensor may change from a first value corresponding to the first exposure time to a second value corresponding to the second exposure time. Process 1100 may also involve AE circuit 232 providing to the synchronization driver circuit 234 an indication that the exposure time is adjusted. Process 1100 may further involve synchronization driver circuit 234 adjusting the first frame rate to match the second frame rate. For instance, process 1100 may involve synchronization driver circuit 234 setting the first frame rate of first image sensor 210 to the current frame rate of second image sensor 220.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., " a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., " a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
detecting a change in brightness in ambient lighting when an electronic apparatus operates in a dual-camera mode utilizing images captured by a first image sensor and a second image sensor; and
synchronizing frame rates of the first image sensor and the second image sensor responsive to the detecting.

2. The method of Claim 1, wherein the synchronizing of the frame rates of the first image sensor and the second image sensor comprises:
determining, by a synchronization driver circuit, the first frame rate of the first image sensor, the second frame rate of the second image sensor, and a difference between the first frame rate and the second frame rate;
communicating, by the synchronization driver circuit to an automatic exposure (AE) circuit, the first frame rate, the second frame rate, and the difference between the first frame rate and the second frame rate;
adjusting, by the AE circuit, an exposure time associated with the first image sensor and the second image sensor from a first exposure time to a second exposure time responsive to the detecting; and
providing, by the AE circuit to a synchronization driver circuit, an indication that the exposure time is adjusted.

3. The method of Claim 2, wherein, responsive to the AE circuit adjusting the exposure time, the second frame rate of the second image sensor changes from a first value corresponding to the first exposure time to a second value corresponding to the second exposure time, and wherein the synchronizing of the frame rates of the first image sensor and the second image sensor further comprises:
adjusting, by the synchronization driver circuit, the first frame rate to match the second frame rate.

4. The method of Claim 1, wherein the synchronizing of the frame rates of the first image sensor and the second image sensor comprises:
adjusting an exposure time associated with the first image sensor and the second image sensor from a first exposure time to a second exposure time responsive to the detecting, wherein, responsive to the adjusting of the exposure time, a second frame rate of the second image sensor changes from a first value corresponding to the first exposure time to a second value corresponding to the second exposure time;
determining a difference between a first frame rate of the first image sensor and the second frame rate of the second image sensor;
determining whether the difference between the first frame rate and the second frame rate is greater than a first threshold;
responsive to a determination that the difference between the first frame rate and the second frame rate is greater than the first threshold, determining whether the difference between the first frame rate and the second frame rate is less than a second threshold which is greater than the first threshold; and
responsive to a determination that the difference between the first frame rate and the second frame rate is less than the second threshold and greater than the first threshold, adjusting the first frame rate to match the second frame rate.

5. The method of Claim 4, wherein the synchronizing of the frame rates of the first image sensor and the second image sensor further comprises:
responsive to a determination that the difference between the first frame rate and the second frame rate is less than the first threshold or greater than the second threshold, monitoring a change in the difference between the first frame rate and the second frame rate; and
adjusting the first frame rate to match the second frame rate upon the difference between the first frame rate and the second frame rate falling within a range between the first threshold and the second threshold.

6. The method of Claim 1, wherein the synchronizing of the frame rates of the first image sensor and the second image sensor comprises:
adjusting an exposure time associated with the first image sensor and the second image sensor from a first exposure time to a second exposure time responsive to the detecting.

7. The method of Claim 6, wherein, responsive to the adjusting of the exposure time, a second frame rate of the second image sensor changes from a first value corresponding to the first exposure time to a second value corresponding to the second exposure time, and wherein the synchronizing of the frame rates of the first image sensor and the second image sensor further comprises:
determining a first frame rate of the first image sensor, the second frame rate of the second image sensor, and a difference between the first frame rate and the second frame rate; and
adjusting the first frame rate to match the second frame rate.

8. A method of any one of the preceding claims, further comprising:
launching a dual-camera application that utilizes images captured by the first image sensor and the second image sensor.

9. The method of Claim 8, wherein the synchronizing comprises:
determining a change in the frame rate of the second image sensor (the second frame rate) as a result of a change in an exposure time due to the detected change in brightness in the ambient lighting; and
adjusting the frame rate of the first image sensor (the first frame rate) to synchronize the first frame rate and the second frame rate.

10. An apparatus, comprising:
a processor coupled to receive first data representative of first images captured by a first image sensor and second data representative of second images captured by a second image sensor, the processor configured to control a first frame rate of the first image sensor and a second frame rate of the second image sensor by performing operations comprising:
detecting a change in brightness in ambient lighting based at least in part on the first data or the second data;
adjusting an exposure time, associated with the first image sensor and the second image sensor, from a first exposure time to a second exposure time responsive to the detecting; and
synchronizing the first frame rate and the second frame rate responsive to the detecting.

11. The apparatus of Claim 10, wherein, in synchronizing the first frame rate and the second frame rate, the processor is configured to perform operations comprising:
detecting a change in the second frame rate as a result of a change in the exposure time; and
adjusting the first frame rate to synchronize the first frame rate and the second frame rate.

12. The apparatus of Claim 11, wherein, in adjusting the first frame rate to synchronize the first frame rate and the second frame rate, the processor is configured to perform operations comprising:
determining a difference between the first frame rate of the first image sensor and the second frame rate of the second image sensor;
determining whether the difference between the first frame rate and the second frame rate is greater than a first threshold;
responsive to a determination that the difference between the first frame rate and the second frame rate is greater than the first threshold, determining whether the difference between the first frame rate and the second frame rate is less than a second threshold which is greater than the first threshold; and
responsive to a determination that the difference between the first frame rate and the second frame rate is less than the second threshold and greater than the first threshold, adjusting the first frame rate to match the second frame rate.

13. The apparatus of Claim 12, wherein, in adjusting the first frame rate to synchronize the first frame rate and the second frame rate, the processor is further configured to perform operations comprising:
responsive to a determination that the difference between the first frame rate and the second frame rate is less than the first threshold or greater than the second threshold, monitoring a change in the difference between the first frame rate and the second frame rate; and
adjusting the first frame rate to match the second frame rate upon the difference between the first frame rate and the second frame rate falling within a range between the first threshold and the second threshold.

14. The apparatus of Claim 11, wherein, in adjusting the first frame rate to synchronize the first frame rate and the second frame rate, the processor is configured to perform operations comprising:
determining the first frame rate, the second frame rate, and a difference between the first frame rate and the second frame rate; and
adjusting the first frame rate to match the second frame rate.

15. The apparatus of Claim 10, wherein, in synchronizing the first frame rate and the second frame rate, the processor is configured to perform operations comprising:
determining, by a synchronization driver circuit of the processor, the first frame rate of the first image sensor, the second frame rate of the second image sensor, and a difference between the first frame rate and the second frame rate;
communicating, by the synchronization driver circuit to an automatic exposure (AE) circuit of the processor, the first frame rate, the second frame rate, and the difference between the first frame rate and the second frame rate;
adjusting, by the AE circuit, an exposure time associated with the first image sensor and the second image sensor from a first exposure time to a second exposure time responsive to the detecting, wherein, responsive to the AE circuit adjusting the exposure time, the second frame rate of the second image sensor changes from a first value corresponding to the first exposure time to a second value corresponding to the second exposure time;
providing, by the AE circuit to the synchronization driver circuit, an indication that the exposure time is adjusted; and
adjusting, by the synchronization driver circuit, the first frame rate to match the second frame rate.
